# EUROPEAN PATENT SPECIFICATION

(11) **EP 3 893 330 B1**
(45) Date of publication and mention of the grant of the patent: **19.02.2025**
(21) Application number: 19893426.7
(22) Date of filing: 13.11.2019
(51) Int. Cl.: H01R 9/05, H01R 4/48, H01R 24/52, H01R 24/54, H01R 103/00, H02G 15/02, H02G 15/08

(54) **CONNECTION DEVICE FOR A COAXIAL CABLE**
ANSCHLUSSVORRICHTUNG FÜR KOAXIALKABEL
DISPOSITIF DE CONNEXION POUR CÂBLE COAXIAL

(30) Priority: 04.12.2018 ES 201831875 U
(43) Date of publication of application: 13.10.2021
(73) Proprietor: ITS Partner Outsourcing Business Solutions, S.L, 08173 Sant Cugat del Vallés Barcelona (ES)
(72) Inventor: LAVADO GARCIA, Luciano, 20009 San Sebastian (Gipuzkoa) (ES)
(74) Representative: Evens, Paul Jonathan
(86) International application number: PCT/ES2019/070778
(87) International publication number: WO 2020/115340

(56) References cited:
- WO-A1-2005/104300
- WO-A1-2017/025643
- DE-A1- 3 131 214
- DE-U1- 202004 021 121
- ES-A1- 2 600 968
- FR-A1- 2 488 452
- US-A1- 2004 166 722
- US-B1- 6 338 653

## Description

### Technical field

The present invention relates to a connection device for at least one coaxial cable used to distribute radio signals.

### Prior state of the art

A coaxial cable is a cable used to carry low and high-frequency electrical signals which has two concentric conductors, a central one referred to as live or core, and an outer one, with a tubular appearance, referred to as mesh or shielding, which acts at the same time as a return for the electrical currents carried by the core and electromagnetic shielding. Between both conductors, an insulating material referred to as dielectric is arranged, the uniformity and features of which will mainly depend on the quality of the cable. The entire assembly is usually protected by an insulating outer jacket.

The use of coaxial cables for the distribution of electrical signals is widespread in telecommunications installations in all types of buildings. An example of the type of signals distributed by coaxial cables are radio, television and satellite signals, which can be digital or analogue. Apart from the coaxial cable, telecommunications installations further comprise a series of apparatuses for several functions such as processing, amplifying and distributing the signals that go through the coaxial cable, said apparatuses being able to be passive or active. Said apparatuses may include receivers that will use the signals distributed by the coaxial cable.

For any coaxial cable telecommunications installation to function properly, a device is required to connect the coaxial cables to the apparatuses that make up the installation.

The connection device used must guarantee at least electrical continuity between the core and the shielding of the coaxial cable, and the corresponding portions of the internal circuit of the device to which they are connected. The connection device must maintain the impedance of the coaxial cable with the aim of not degrading the quality of the signal, providing a minimum degree of electromagnetic compatibility (EMC) in order to comply with current regulations and it must also ensure reliable mechanical securing under normal conditions of use.

Known coaxial connection devices can be divided into two main groups:
- connection with a connector (for example, type F is widely used in the distribution of radio, television and satellite signals), which comprise male and female connectors. Normally, the male connector is installed in the coaxial cable and the female connector makes up part of the connection device. There are, however, connection systems with connectors wherein the female connector is in the coaxial cable and the male connector is in the device. In any case, the connector of the coaxial cable may be detachable or non-detachable, and
- connection systems without connectors.

In coaxial connection devices with a connector, the electrical continuity of the signals between the core of the coaxial cable and the female connector is carried out by means of a clamp or metal element with the suitable shape and which is located in the female connector, which puts pressure on the core, but without ensuring the mechanical fastening. The mechanical fastening between the male connector joined to the coaxial cable and the female connector is normally performed by providing the metal outer portion of both connectors with some element that prevents or hinders movement caused by axial tensile forces, such as threading, a bayonet or a spring. The same contact portions that lock the movement and mechanically fasten the joint of the two connectors are those that provide electrical continuity to the return currents which circulate through the mesh of the coaxial cables and the outside of the male and female connectors.

One disadvantage of coaxial connection devices with connectors is that the space occupied by the connectors is significant in relation to the total volume occupied by the apparatus once installed. The space available for the installation of the device is beyond the control of the operator and they are normally small spaces such as junction boxes, for which reason the volume occupied by the connectors may prevent or hinder the installation.

Another disadvantage of the coaxial connection devices with connectors, apart from the cost of the connectors themselves and the need for the operator to have them in stock at all times, is the time required for the assembly thereof.

Another disadvantage of some types of non-detachable connectors is that they need a crimping or compression tool. This tool has a cost and requires the operator to take it to all the installations.

Another disadvantage of non-detachable connectors is that the replacement thereof requires the cable to be cut in order to place a new one. This shortens the available length of the coaxial cable, which may hinder or even prevent the connection.

In DE753097U and DE2750243A1, connection devices for coaxial cables without connectors are described wherein the coaxial cable is retained in the body of the connection device by means of a screw. The pressure exerted by the screw is what ensures the electrical continuity between the core of the coaxial cable and the internal circuitry of the device. When the screw and the core of the coaxial cable are in contact, a mismatch in impedance occurs which results in a degradation of the electrical signal. Furthermore, the use of external tools is necessary to be able to fasten and free the coaxial cable to the body of the connection device.

In ES2323610A1 and ES2190349A1, connection devices for coaxial cables without connectors are described wherein the coaxial cable is retained in the body of the connection device through a flange which tightens the mesh and the outer portion of the coaxial cable. The electrical continuity between the core of the coaxial cable and the internal circuit of the device to which it is connected is carried out by means of a clamp or metal element in a suitable manner and located in the female connector, which exerts pressure on the core, but usually without ensuring the mechanical fastening of the coaxial cable and the device in normal conditions of use. In these types of joints, there is a discontinuity produced in the electrical connection between the flange and the body of the device in the longitudinal direction of the coaxial cable, resulting in a loss of electromagnetic shielding with respect to a continuous connection throughout the entire radial perimeter of the coaxial cable.

A connection device according to the preamble of independent claim 1 is disclosed in DE 20 2004 021121 U1. Other relevant devices are known from ES 2 600 968 A1 and DE 31 31 214 A1.

### Description of the invention

The object of the invention is to provide a connection device for at least one coaxial cable, as defined in the claims.

The connection device according to the invention is disclosed in independent claim 1 and comprises a body configured to house one end of the coaxial cable, the body comprising at least one hole configured to be crossed through by the corresponding coaxial cable in an insertion direction and retention means configured to retain the coaxial cable inside the body.

The retention means comprise at least one retention element which is movable between a first position and a second position, the retention element comprising an opening, the retention element being configured to be crossed through by the corresponding coaxial cable in the insertion direction through said opening when the retention element is arranged in the first position wherein said opening is arranged aligned with the respective hole of the body, the retention element being configured to trap the coaxial cable against the body in the second position wherein the opening is arranged off-centre with respect to the respective hole of the body.

In this manner, a connection device is obtained which does not require the use of tools to ensure the fastening of the coaxial cable to the connection device, in particular being a type of connection device which includes input and/or output ports for radio signals with the coaxial cables which distribute them.

Furthermore, a connection device is obtained which is optimised in terms of costs and dimensions since it does not require connectors nor additional outer parts in order to maintain the fastening of the coaxial cable to the connection device.

Moreover, the connection device enables the coaxial cable to be fastened in a quicker and more comfortable manner than the current connection devices, reducing costs in the installation time. The operator must actuate the retention element until it is moved to the first position. In said position, the coaxial cable may be inserted into the body in the insertion direction such that said coaxial cable crosses through the respective hole of the body and the opening of the retention element. Once the operator stops actuating the retention element, the coaxial cable stays trapped against the body without it being able to be pulled out of it in the direction opposite from the insertion direction. To release the coaxial cable, the operator must reactivate the retention element until it is moved to the first position wherein it can be removed by pulling it in the opposite direction from the insertion direction.

Furthermore, the electromagnetic shielding is equal to or greater than that of current connection systems.

Preferably, the spring of the elastic means is a conical compression spring with the coils thereof in a quadrangular shape, the conical compression spring being dimensionally adapted to the cavity of the body, arranged having a base coil of the conical compression spring make contact with the bottom of the cavity and an upper coil with the retention element.

Thus, thanks to the square or rectangular configuration of the spring, the minimum height of the apparatus implementing the coaxial connection device is reduced since this height comes from the button plus the height of the uncompressed spring, plus a height of the body of the device. With the use of a quadrangular conical compression spring, the minimum height of the uncompressed spring is reduced for the same spring force. This is due to the fact that the coils thereof do not collide with each other when compressed.

In this manner, it is possible to house the coaxial connection device in cases wherein the height for housing the same is limited. This same configuration would not be possible with a circular conical spring since the diameter of the larger coil would be larger than that of the usual helical spring used with the same force, and therefore it would not fit into the cavity of the retention element. Likewise, the cross section of said quadrangular conical compression spring may be indistinctly circular or square.

Preferably, the connection device comprises a symmetrical connection clamp, arranged adjacent to the second portion of the stop of the inlet hole for the coaxial cable, the symmetrical connection clamp having a folded body and at the upper end thereof it has pins with an inclined surface oriented towards the inlet of the coaxial cable, the pins being adapted to house the core of the coaxial cable between them. By being symmetrical, this clamp is adapted for the introduction of the coaxial cable regardless of the side through which it is inserted.

Thanks to this feature of the invention, it is possible to introduce the coaxial cable through both sides of the coaxial connection device, the core of said coaxial cable being fastened in order to ensure good contact. This solution requires simpler and cheaper die-cutting than the one required to manufacture a conventional clamp which has several folds and should be duplicated in order to achieve the required symmetry. This conventional clamp would also increase the occupied space in order to enable the clamp to house the core of the coaxial cable regardless of the side through which said cable is inserted.

Additionally, a particularity of the invention is that the coaxial connection device comprises a viewing window, in the upper portion of the body, configured as a through hole which connects the outside of said body with the stop of the inlet hole for the coaxial cable.

In this manner, it prevents the risk of a bad connection derived from the different forces suffered in the axial direction by the coaxial cables which cause them to become separated and a bad electrical contact is produced. Thus, with this viewing window the correct insertion of the coaxial cable up to the mechanical stop is checked, without reducing the electromagnetic shielding since the opening of the viewing window has reduced dimensions and the position thereof does not interrupt the electrical contact between the mesh and the chassis.

These and other advantages and features of the invention will become apparent in light of the figures and the detailed description of the invention.

### Description of the drawings

Figure 1 shows an isometric view of an electrical radio frequency signal distribution apparatus comprising connection devices according to the invention.
Figure 2 shows a longitudinal cross section of the connection device shown in Figure 1.
Figure 3 partially shows an exploded view of the partially cross-sectioned connection device shown in Figure 1.
Figure 4 partially shows a cross-sectional view of the connection device shown in Figure 1 in a position wherein the connection device is in passive mode.
Figure 5 shows a side view of the connection device shown in Figure 1 in a position wherein the connection device is in passive mode.
Figure 6 partially shows a cross-sectional view of the connection device shown in Figure 1 in a position wherein the connection device is in active mode.
Figure 7 shows a side view of the connection device shown in Figure 1 in a position wherein the connection device is in active mode.
Figure 8 shows a detail view of a partially cross-sectioned body of the connection device shown in Figure 1.
Figure 9 shows a detail view of a retention element of the connection device shown in Figure 1.
Figure 10 shows a user socket base comprising a connection device according to the invention.
Figure 11 shows a cross section of the connection device shown in Figure 10.
Figure 12 shows a connector comprising a connection device according to the invention.
Figure 13 shows a cross section of the connection device shown in Figure 12.
Figure 14 shows a perspective view of the quadrangular conical compression spring.
Figure 15 shows a perspective detail of the connection of the core of the coaxial cable with the symmetrical connection clamp.
Figure 16 shows a detail of a top view of the device wherein the viewing window can be seen.
Figure 17 shows an isometric view of an electrical radio frequency signal distribution apparatus comprising several connection devices according to the invention.

### Detailed description of the invention

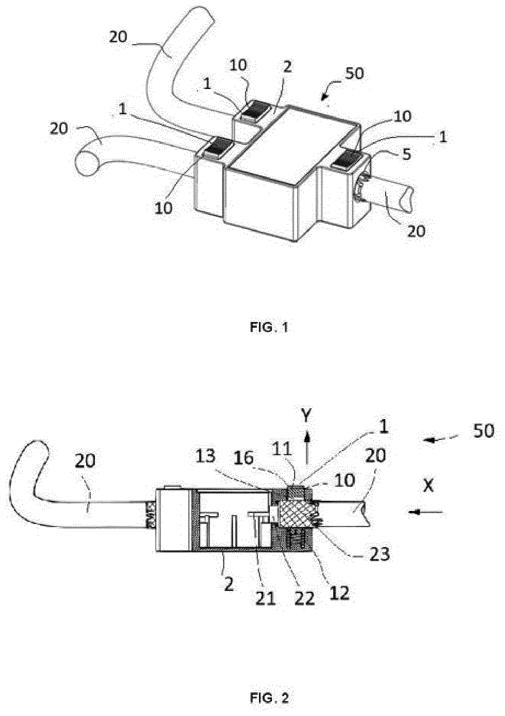

The connection device 1, 1', 1" for at least one coaxial cable according to the invention shown in Figures 1 to 17 comprises a body 2, 2', 2" configured to house one end of the corresponding coaxial cable 20, the body 2, 2', 2" comprising at least one hole 4 and 5 configured to be crossed through by the corresponding coaxial cable 20 in an insertion direction X, and retention means 10 configured to retain the coaxial cable 20 inside the body 2, 2', 2".

The coaxial cable 20 is a cable used to transport low and high-frequency electrical signals and comprises a core 21 in the form of a metal wire, an insulator or dielectric 22, and shielding 23 arranged concentrically to the core 21, the dielectric 22 in turn being arranged between the core 21 and the shielding 23. The shielding 23 is a tubular element made of mesh or sheets which serves as a return for the electrical currents transported by the core 21 and electromagnetic shielding. The coaxial cable 20 further comprises an outer jacket 24 surrounding the shielding 23.

The end of the coaxial cable 20 is arranged stripped in order to be able to be fastened and establish the electrical connection in the connection device 1, meaning that the shielding 23 is arranged combed back such that the end of the coaxial cable 20 has a first segment 20a which has the core 21 exposed to the air, a second segment 20b wherein the dielectric 22 is exposed to the air and a third segment 20c wherein the shielding 23 is combed backwards partially covering the outer jacket 24.

The retention means 10 comprise at least one retention element 11 which is movable between a first position and a second position, the retention element 11 comprising an opening 13, the retention element 11 being configured to be crossed through by the corresponding coaxial cable 20 in the insertion direction X through said opening 13 when the retention element 11 is arranged in the first position wherein said opening 13 is arranged aligned with the respective hole 4 and 5 of the body 2, 2', 2", the retention element 11 being configured to trap the coaxial cable 20 against the body 2 in the second position wherein the opening 13 is arranged off-centre with respect to the respective hole 4 and 5 of the body 2, 2', 2". The dimensions of the hole 4 and 5 as well as those of the opening 13 are such that when the retention element 11 is in the first position, they enable the passage of the coaxial cable 20, in particular of the segment 20c of the coaxial cable 20 without problems when it is introduced in the insertion direction X. However, when the retention element 11 is in the second position it is not possible to introduce the coaxial cable 20 in the insertion direction X since the effective passage area 29 of the opening 13 is smaller than the outer diameter of the coaxial cable 20.

The opening 13 of the retention element 11 is delimited by a retention surface 17 configured to push, during the movement of the retention element 11 to the second position, the coaxial cable 20 against a surface 4a and 5a delimiting the respective hole 4 and 5 of the body 2, 2', 2" and to maintain said coaxial cable 20 trapped against said surface 4a and 5a in the second position. In this second position, the retention means 11 prevent the axial movement of the coaxial cable 20.

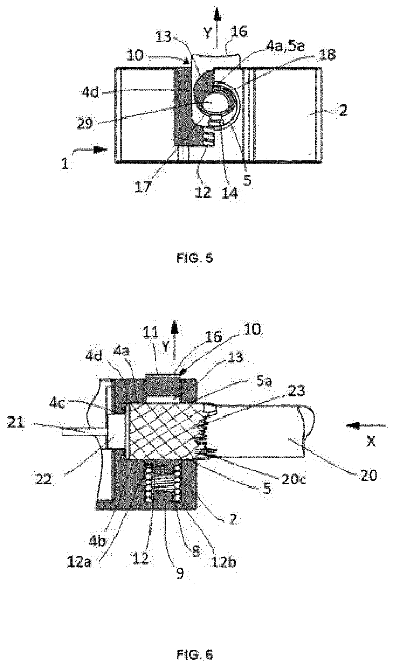

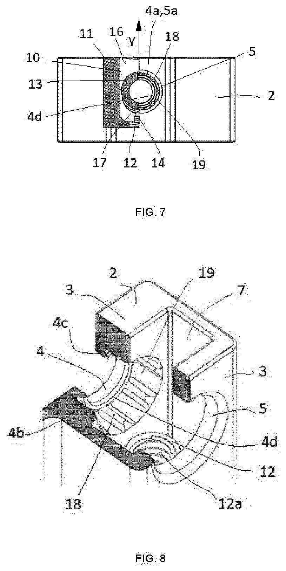

In order to fasten or release the coaxial cable 20 of the connection device 1, the user must actuate the retention element 11. When the retention element 11 is actuated, said retention element is arranged in the first position, such that the connection device 1 is in active mode as shown in Figures 6 and 7 (in the figures only the active position in the first embodiment is shown, being equivalent in the rest of the embodiments). However, when the retention element 11 is in a passive mode (meaning, it is not actuated and therefore is not subjected to any external force) it is maintained in the second position as shown in Figures 2, 4, 5, 10 and 12.

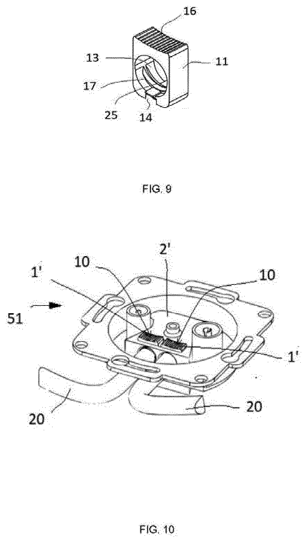

The retention element 11, shown in detail in Figure 9, comprises an actuation surface 16 accessible from outside the body 2, 2', 2", and to the connection device 1, 1', 1" through which the user actuates the retention means 10. In the embodiments shown in the figures, the actuation surface 16 is arranged substantially orthogonal to the insertion direction X. Said actuation surface 16 is preferably curved in order to improve ergonomics when pressed on with the finger.

In the embodiments shown in the figures, the retention means 10 comprise elastic means 12 configured to maintain the retention element 11 in the second position. When the retention element 11 is actuated, said retention element 11 is moved from the second position to the first position as long as the user compresses the elastic means 12 when said retention element 11 is actuated. Once the coaxial cable 20 is introduced, preferably manually, in the insertion direction and crosses through the corresponding hole 4 and 5 of the body 2, 2', 2" and the opening 13 of the retention element 11, the user can stop pressing on the retention element 11 that would return to the second position thanks to the elastic means 12.

To release the coaxial cable, the operator must reactivate the retention element 11 until it is moved to the first position wherein it can be removed by pulling it in the opposite direction from the insertion direction.

In the embodiments shown in the figures, the elastic means 12 comprise a spring. In other embodiments not shown in the figures, the elastic means may include other elastic elements known in the state of the art. Even said elastic means can be integrated in the retention element, meaning, for example, the retention element itself can be made of a material that is elastic performing the functions of the spring.

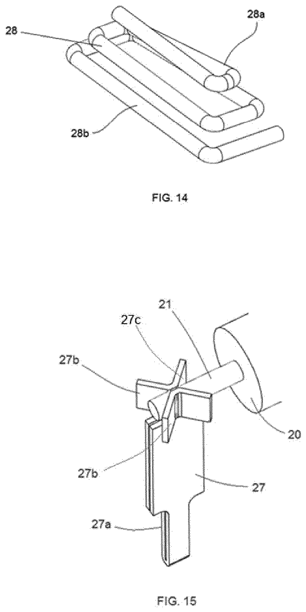

In a preferred embodiment, the spring of the elastic means 12 is a conical compression spring 26 with coils in a quadrangular shape. Said conical compression spring 26 is dimensionally adapted to the cavity 7 of the body 2,2',2" (Figure 14) and is arranged making contact at a bottom 8 with a base coil 28b, this being the largest coil. In the upper portion thereof, the spring drives the retention element (11) due to the contact with an upper coil (28a), this being the smallest. Consequently, the height of the connection device is reduced for installations that require small spaces such as short junction boxes, while conserving the same spring force.

In the embodiments shown in the figures, the retention element 11 moves in a direction Y orthogonal to the insertion direction X. Although in the embodiments shown in the figures, said movement is linear, in other embodiments the retention element may follow non-linear paths, such as curves or ellipses. In other embodiments, furthermore, the retention element 11 can move in a direction that is not orthogonal to the insertion direction X.

In the first embodiment shown in Figures 1 to 9 and Figures 14 to 16, an electrical signal distribution apparatus 50 is shown comprising several connection devices 1, one for each cable 20. The distribution apparatus 50 includes a body 2 which includes several cavities 7, in each of which the corresponding retention element 11 is housed. Each cavity 7 is delimited by walls 3, each of which includes a hole 4 and 5, said holes 4 and 5 being configured to be crossed through by the corresponding cable 20. The holes 4 and 5 are aligned with each other defining the insertion direction X for the corresponding coaxial cable 20. The retention element 11 is movable in the cavity 7 in a direction Y orthogonal to the insertion direction X. The elastic means 12 comprise a spring which is housed in the cavity 7. The cavity 7 is delimited by a bottom 8 whereon the spring is resting and walls 3 arranged facing each other, said walls 3 being crossed through by the respective hole 4 and 5.

One end of the spring 12a is resting on the bottom 8 of the cavity 7 while the other end of the spring 12b is arranged in contact with the retention element 11. In particular, the body 2 includes a projection 9 protruding from the bottom 8 towards the inside of the cavity 7 and whereon the end of the spring 12a is arranged as coupled, resting on the bottom 8. Moreover, the retention element 11 includes a housing 14 wherein the other end of the spring 12b is housed.

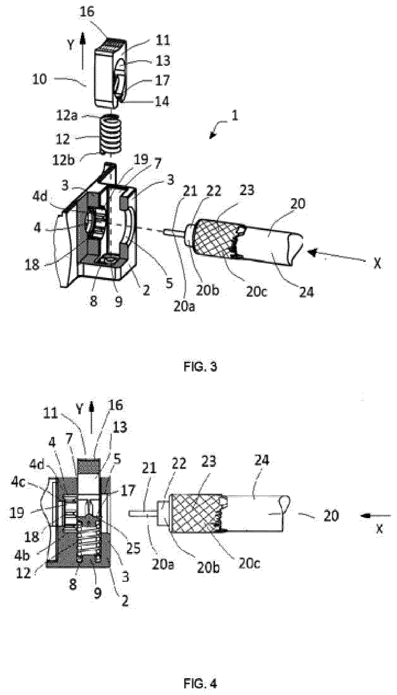

In the embodiment shown in Figures 1 to 9 and Figures 14 to 16, the retention surface 17 delimiting the opening 13 of the retention element 11 is a curved surface as shown in Figures 3, 5 and 7. In other embodiments, said surface can be a flat surface. Moreover, the retention surface 17 may not be continuous, being configured to come into contact with the coaxial cable at discrete points. Moreover, the retention surface 17 may surround the entire perimeter of the coaxial cable 20 as is the case in this embodiment. In this embodiment, furthermore, the retention element 11 comprises a projection 25 projecting radially towards the inside of the opening 13 from the retention surface 17, said projection 25 being wedge-shaped, such that said projection 25 is driven into the 20 coaxial cable, improving retention.

In the embodiment shown in Figures 1 to 9 and Figures 14 to 16, the opening 13 has a circular geometry with a diameter larger than the diameter of the coaxial cable 20, in particular larger than the diameter of the segment 20c of the coaxial cable 20 which has the shielding 23 combed backwards. In other embodiments, the opening 13 may have other geometries as long as the equivalent diameter of said geometry is larger than the diameter of the coaxial cable 20, in particular the diameter of the segment 20c of the coaxial cable 20.

In the embodiment shown in Figures 1 to 9 and Figures 14 to 16, one of the holes 4 of the body 2 includes a stop 4d which divides said hole 4 into a first portion 4b configured to house the coaxial cable 20 and a second portion 4c with a smaller diameter than the first portion 4b and which is configured to house a core 21 and an insulating element 22 of the coaxial cable 20. Meaning, in this second portion 4c the first segment 20a and the second segment 20b of the end of the coaxial cable 20 would be housed but the stop 4d produces a narrowing of the passage which would prevent the axial movement of the third segment 20c of the end of the cable 20 towards the second portion 4c of the hole 4. This stop 4d acts as an indicator to the operator of how far the coaxial cable 20 can and should be introduced.

According to the invention and as shown in Figures 1 to 9 and Figures 14 to 16, the stop 4d is a wedge-shaped rotation surface which extends towards the inside of the hole 4, the stop 4d being configured to be introduced between the dielectric 22 and the shielding 23 of the coaxial cable 20 increasing the contact between the shielding 23 and the body 2. Since the operator/user must insert the coaxial cable 20 until it hits the stop 4d, there is a continuous 360° electrical contact between the shielding 23 and the body, 2 resulting in an increase in the electromagnetic shielding of the coaxial connection.

Furthermore, the first portion 4b of the hole 4 divided by the stop 4d has a diameter adjusted to that of the third segment 20c of the end of the coaxial cable 20, thus ensuring contact along the entire circular perimeter of the coaxial cable 20 with the body 2, also increasing the electromagnetic shielding of the coaxial connection.

Moreover, in the embodiment shown in Figures 1 to 9 and Figures 14 to 16, the body 2 includes in the first portion 4b a plurality of ribs 18 which extend in the insertion direction X and which are configured to ensure the continuous contact with the coaxial cable 20. In this embodiment, each rib 18 extends longitudinally along the entire surface 4a delimiting the second portion 4c of the hole 4 in the body, but in other embodiments they could extend along other nonrectilinear paths, such as helical paths. The plurality of ribs 18 are arranged homogeneously distributed along the perimeter of the delimiting surface 4a of the hole 4, alternating with gaps 19. The plurality of ribs 18 compensates for the tolerances and differences in diameter of the coaxial cable 20 ensuring the electrical contact between at least each rib 18 and the shielding 23 of the coaxial cable 20. In the coaxial cables 20 with the maximum diameter admitted by the connection device 1, the plurality of ribs 18 combs the shielding 23 being slightly driven into the outer jacket 24 of the coaxial cable 20. The gaps 19 are configured to relieve the moved material of the shielding 23 and of the outer jacket 24.

Finally, the retention element 11 is preferably made of a plastic material, although it could be made of other materials. Moreover, the body 2 is made of an electrically conductive material, preferably metal.

An object of the present invention is not the electrical connection between the core of the coaxial cable and the corresponding portion of the internal electrical circuit of the connection device since it is known in the state of the art. For this reason, the detailed description thereof was not considered necessary, including in the description what is necessary to aid in the understanding of the device object of the invention.

However, in relation to the electrical connection between the core of the coaxial cable and the corresponding portion of the electrical circuit, the present invention contemplates a novel alternative to said conventional connection. As seen in Figure 15, a symmetrical connection clamp 27 is used, adjacent to the portion 4c of the hole 4, which has a folded body 27a and at the upper end thereof it has pins 27b with an inclined surface 27c oriented towards the inlet of the coaxial cable 20. Thus, with the inlet of the coaxial cable 20, the inclined surface 27c of both pins 27b is pressed, the core 21 of the coaxial cable 20 remaining in the separation of the fold of the folded body 27a, in other words, between both pins 27b and therefore, ensuring the electrical connection.

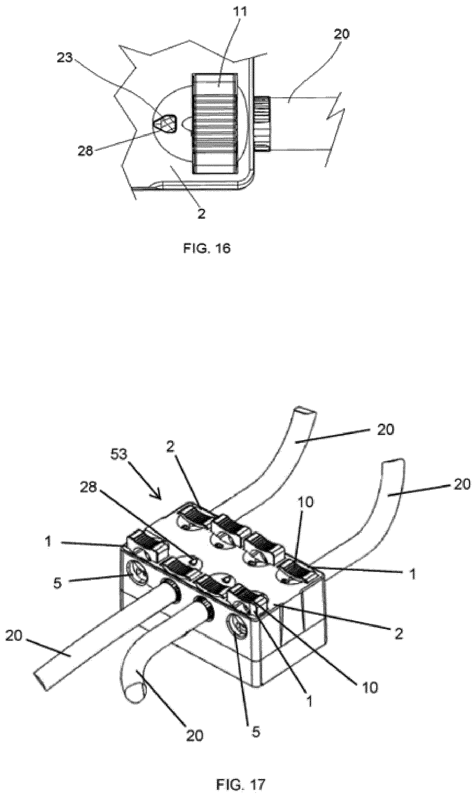

Figure 16 shows a viewing window 28 in the upper portion of the body 2, 2', 2", configured as a through hole which connects the outside of the body 2, 2', 2" with the stop 4d. Thanks to this configuration, it is possible to check if the coaxial cable 20 has been introduced correctly.

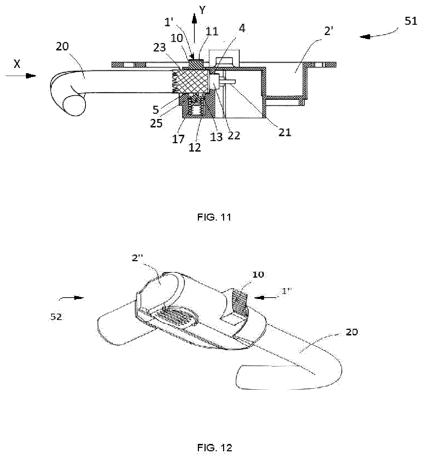

Figures 10 and 11 show a user socket base 51 comprising several connection devices 1' according to the invention. The user socket base 51 comprises a body 2' which includes several cavities 7, in each of which the corresponding retention element 11 is housed. Each cavity 7 is delimited by walls 3, each of which includes a hole 4 and 5 configured to be crossed through by the corresponding cable 20. All the features described in the first embodiment of the connection device 1 are also applicable to the second embodiment of the connection device 1'.

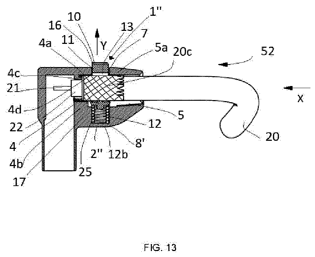

Figures 12 and 13 show a connector 52 comprising a connection device 1" according to the invention. All the features described in the first embodiment of the connection device 1 shown in Figures 1 to 9 and Figures 14 to 16 are also applicable to this embodiment of the connection device 1".

Figure 17 shows a connector 53 comprising several connection devices 1 according to the invention. All the features described in the first embodiment of the connection device 1 shown in Figures 1 to 9 and Figures 14 to 16, are also applicable to this embodiment of the connection device. With this configuration of the connector it is possible to introduce the coaxial cables 20 through both portions of the device and alternating them in the holes 5 made for this purpose. Thus, it is possible to pair the coaxial cables 20 in the connection by introducing the cables 20 aligned or indistinctly, in an alternative manner.

Thanks to this configuration, the installation by the operator is facilitated and the cable does not have to be curved when the position of the port of the apparatus requiring the connection of the coaxial cable is fixed and the cables are not facing each other. As a general rule, this curvature made in the cable must not be greater than five times the diameter of the cable in order to maintain the electrical and mechanical properties thereof. This considerably increases the space occupied by the connectors in conventional coaxial connection devices, which in many cases is limited, such as in the case of junction boxes. Therefore, in order to avoid these drawbacks, with the embodiment shown in Figure 17, the inlet ports of the holes 5 are able to be arranged in front, opposite from each other, distributing the cables between the connection ports located on one side and the other in a dual connection. This thus eliminates the need to curve the coaxial cable 20 when a 180° change in direction is required, becoming a direct connection.

## Claims

1. A connection device for at least one coaxial cable, comprising a body (2,2',2") configured to house one end of the coaxial cable (20), the body (2,2',2") comprising at least one hole (4,5) configured to be crossed through by the corresponding coaxial cable (20) in an insertion direction (X), and retention means (10) configured to retain the coaxial cable (20) inside the body (2,2',2"), with the retention means (10) comprising at least one retention element (11) movable between a first position and a second position, the retention element (11) comprising an opening (13), the retention element (11) being configured to be crossed through by the corresponding coaxial cable (20) in the insertion direction (X) through said opening (13) when the retention element (11) is arranged in the first position wherein said opening (13) is arranged aligned with the respective hole (4,5) of the body (2,2',2"), the retention element (11) being configured to trap the coaxial cable (20) against the body (2,2',2") in the second position wherein the opening (13) is arranged off-centre with respect to the respective hole (4,5) of the body (2,2',2"),
wherein the retention means (10) comprise elastic means (12) configured to maintain the retention element (11) in the second position,
wherein the body (2,2',2") comprises at least two holes (4,5) configured to be crossed through by the corresponding coaxial cable (20), said holes being arranged (4,5) aligned with each other defining the insertion direction (X) for the coaxial cable (20), and a cavity (7) which communicates both holes (4,5) with each other, and
wherein one of the holes (4) of the body (2,2',2") includes a stop (4d) which divides the hole (4) into a first portion (4b) configured to house the coaxial cable (20) and a second portion (4c) with a smaller diameter than the first portion (4b) and which is configured to house a core (21) and an insulating element (22) of the coaxial cable (20),
**characterised in that**:
the retention element (11) is arranged at least partially housed in the cavity (7), the retention element (11) being movable in the cavity (7); and
the stop (4d) is a wedge-shaped rotation surface which extends towards the inside of the hole (4), the stop (4d) being configured to be introduced between the insulating element (22) and a shielding (23) of the coaxial cable (20) increasing the contact between the shielding (23) and the body (2).

2. The connection device according to the preceding claim, wherein the retention element (11) is arranged in the first position when it is actuated, being maintained in the second position when it is in passive mode.

3. The connection device according to the preceding claim, wherein the retention element (11) is movable in the cavity (7) in a direction (Y) orthogonal to the insertion direction (X).

4. The connection device according to claim 3, wherein the elastic means (12) comprise a spring which is housed in the cavity (7) of the body (2,2',2"), with one end of the spring (12a) resting on a bottom (8) of the cavity (7) and another end of the spring (12b) in contact with the retention element (11).

5. The connection device according to the preceding claim, wherein the spring of the elastic means (12) is a conical compression spring (26) with coils in a quadrangular shape, the conical compression spring (26) being dimensionally adapted to the cavity (7) of the body (2,2',2") and arranged having a base coil (28b) of the conical compression spring (26) make contact with the bottom (8) of the cavity (7) and an upper coil (28a) with the retention element (11).

6. The connection device according to any of the preceding claims, wherein the retention element (11) comprises an actuation surface (16) accessible from outside the body (2,2',2").

7. The connection device according to claim 1, wherein the body (2,2',2") includes in the first portion (4b) of the hole (4) a plurality of ribs (18) which extend in the insertion direction (X) and which are configured to ensure the continuous contact with the coaxial cable (20).

8. The connection device according to the preceding claim, wherein the plurality of ribs (18) are distributed along the perimeter of the delimiting surface (4a) of the first portion (4b) of the hole (4).

9. The connection device according to the preceding claim, further comprising a symmetrical connection clamp (27) arranged adjacent to the second portion (4c) of the hole (4), the symmetrical connection clamp (27) having a folded body (27a) and at an upper end pins (27b) with an inclined surface (27c) oriented towards the inlet direction of the coaxial cable (20), the pins (27b) being adapted to house the core (21) of the coaxial cable (20) between them.

10. The connection device according to any of the preceding claims, wherein the opening (13) of the retention element (11) is delimited by a retention surface (17) configured to push, during the movement of the retention element (11) to the second position, the coaxial cable (20) against a surface (4a, 5a) delimiting the respective hole (4,5) of the body (2,2',2") and to maintain said coaxial cable (20) trapped against said surface (4a, 5a) in the second position.

11. The connection device according to the preceding claim, wherein the retention surface (17) is a curved surface.

12. The connection device according to claims 10 or 11, wherein the retention element (11) comprises a projection (25) projecting radially towards the inside of the opening (13) from the retention surface (17) in order to trap the coaxial cable (20), said projection (25) being wedge-shaped.

13. The connection device according to claims 10 or 11, wherein the opening (13) has a circular geometry.

14. The connection device according to any of the preceding claims, comprising a viewing window (28) configured as a through hole which connects the outside of the body (2,2',2") with the stop (4d).

## Patentansprüche

1. Anschlussvorrichtung für zumindest ein Koaxialkabel, umfassend einen Körper (2,2',2"), der konfiguriert ist, um ein Ende des Koaxialkabels (20) aufzunehmen, wobei der Körper (2,2',2") zumindest ein Loch (4,5) umfasst, das konfiguriert ist, um durch das entsprechende Koaxialkabel (20) in einer Einführrichtung (X) durchquert zu werden, und Haltemittel (10), die konfiguriert sind, um das Koaxialkabel (20) innerhalb des Körpers (2,2',2") zu halten, wobei die Haltemittel (10) zumindest ein Halteelement (11) umfassen, das zwischen einer ersten Position und einer zweiten Position bewegbar ist, wobei das Halteelement (11) eine Öffnung (13) umfasst, wobei das Halteelement (11) konfiguriert ist, um durch das entsprechende Koaxialkabel (20) in der Einführrichtung (X) durch die Öffnung (13) durchquert zu werden, wenn das Halteelement (11) in der ersten Position angeordnet ist, wobei die Öffnung (13) ausgerichtet zu dem jeweiligen Loch (4,5) des Körpers (2,2',2") angeordnet ist, wobei das Halteelement (11) konfiguriert ist, um das Koaxialkabel (20) gegen den Körper (2,2',2") in der zweiten Position einzufangen, wobei die Öffnung (13) außermittig in Bezug auf das jeweilige Loch (4,5) des Körpers (2,2',2") angeordnet ist,
wobei die Haltemittel (10) elastische Mittel (12) umfassen, die konfiguriert sind, um das Halteelement (11) in der zweiten Position zu halten,
wobei der Körper (2,2',2") zumindest zwei Löcher (4,5), die konfiguriert sind, um durch das entsprechende Koaxialkabel (20) durchquert zu werden, wobei die Löcher (4,5) zueinander ausgerichtet angeordnet sind und die Einführrichtung (X) für das Koaxialkabel (20) definieren, und einen Hohlraum (7), der beide Löcher (4,5) miteinander verbindet, umfasst, und
wobei eines der Löcher (4) des Körpers (2,2',2") einen Anschlag (4d) beinhaltet, der das Loch (4) in einen ersten Abschnitt (4b), der konfiguriert ist, um das Koaxialkabel (20) aufzunehmen, und einen zweiten Abschnitt (4c) mit einem kleineren Durchmesser als der erste Abschnitt (4b) unterteilt und der konfiguriert ist, um einen Kern (21) und ein Isolierelement (22) des Koaxialkabels (20) aufzunehmen,
**dadurch gekennzeichnet, dass**:
das Halteelement (11) zumindest teilweise in dem Hohlraum (7) aufgenommen angeordnet ist, wobei das Halteelement (11) in dem Hohlraum (7) bewegbar ist; und
der Anschlag (4d) eine keilförmige Rotationsfläche ist, die sich zu dem Inneren des Lochs (4) hin erstreckt, wobei der Anschlag (4d) konfiguriert ist, um zwischen dem Isolierelement (22) und einer Abschirmung (23) des Koaxialkabels (20) eingeführt zu werden und den Kontakt zwischen der Abschirmung (23) und dem Körper (2) erhöht.

2. Anschlussvorrichtung nach dem vorhergehenden Anspruch, wobei das Halteelement (11) in der ersten Position angeordnet ist, wenn es betätigt wird, in der zweiten Position gehalten wird, wenn es in passivem Modus ist.

3. Anschlussvorrichtung nach dem vorhergehenden Anspruch, wobei das Halteelement (11) in dem Hohlraum (7) in einer Richtung (Y) orthogonal zu der Einführrichtung (X) bewegbar ist.

4. Anschlussvorrichtung nach Anspruch 3, wobei die elastischen Mittel (12) eine Feder umfassen, die in dem Hohlraum (7) des Körpers (2,2',2") aufgenommen ist, wobei ein Ende der Feder (12a) auf einem Boden (8) des Hohlraums (7) ruht und ein anderes Ende der Feder (12b) in Kontakt mit dem Halteelement (11) ist.

5. Anschlussvorrichtung nach dem vorhergehenden Anspruch, wobei die Feder der elastischen Mittel (12) eine konische Druckfeder (26) mit Windungen in einer viereckigen Form ist, wobei die konische Druckfeder (26) dimensional an den Hohlraum (7) des Körpers (2,2',2") angepasst und angeordnet ist, um eine Basiswindung (28b) der konischen Druckfeder (26) in Kontakt mit dem Boden (8) des Hohlraums (7) und eine obere Windung (28a) in Kontakt mit dem Halteelement (11) aufzuweisen.

6. Anschlussvorrichtung nach einem der vorhergehenden Ansprüche, wobei das Halteelement (11) eine Betätigungsfläche (16) umfasst, die von außerhalb des Körpers (2,2',2") zugänglich ist.

7. Anschlussvorrichtung nach Anspruch 1, wobei der Körper (2,2',2") in dem ersten Abschnitt (4b) des Lochs (4) eine Vielzahl von Rippen (18) beinhaltet, die sich in der Einführrichtung (X) erstreckt und die konfiguriert ist, um den kontinuierlichen Kontakt mit dem Koaxialkabel (20) sicherzustellen.

8. Anschlussvorrichtung nach dem vorhergehenden Anspruch, wobei die Vielzahl von Rippen (18) entlang des Umfangs der Begrenzungsfläche (4a) des ersten Abschnittes (4b) des Lochs (4) verteilt ist.

9. Anschlussvorrichtung nach dem vorhergehenden Anspruch, ferner umfassend eine symmetrische Anschlussklammer (27), die benachbart zu dem zweiten Abschnitt (4c) des Lochs (4) angeordnet ist, wobei die symmetrische Anschlussklammer (27) einen gefalteten Körper (27a) und an einem oberen Ende Stifte (27b) mit einer geneigten Fläche (27c) aufweist, die zu der Einlassrichtung des Koaxialkabels (20) hin orientiert ist, wobei die Stifte (27b) ausgelegt sind, um den Kern (21) des Koaxialkabels (20) zwischen sich aufzunehmen.

10. Anschlussvorrichtung nach einem der vorhergehenden Ansprüche, wobei die Öffnung (13) des Halteelements (11) durch eine Haltefläche (17) begrenzt ist, die konfiguriert ist, um während der Bewegung des Halteelements (11) zu der zweiten Position das Koaxialkabel (20) gegen eine Fläche (4a, 5a) zu drücken, die das jeweilige Loch (4,5) des Körpers (2,2',2") begrenzt, und um das Koaxialkabel (20) gegen die Fläche (4a, 5a) in der zweiten Position eingefangen zu halten.

11. Anschlussvorrichtung nach dem vorhergehenden Anspruch, wobei die Haltefläche (17) eine gebogene Fläche ist.

12. Anschlussvorrichtung nach Anspruch 10 oder 11, wobei das Halteelement (11) einen Vorsprung (25) umfasst, der radial zu der Innenseite der Öffnung (13) von der Haltefläche (17) vorsteht, um das Koaxialkabel (20) einzufangen, wobei der Vorsprung (25) keilförmig ist.

13. Anschlussvorrichtung nach Anspruch 10 oder 11, wobei die Öffnung (13) eine kreisförmige Geometrie aufweist.

14. Anschlussvorrichtung nach einem der vorhergehenden Ansprüche, umfassend ein Sichtfenster (28), das als ein Durchgangsloch konfiguriert ist, das die Außenseite des Körpers (2,2',2") an den Anschlag (4d) anschließt.

## Revendications

1. Dispositif de raccordement pour au moins un câble coaxial, comprenant un corps (2, 2', 2") conçu pour loger une extrémité du câble coaxial (20), le corps (2, 2', 2") comprenant au moins un trou (4, 5) conçu pour être traversé par le câble coaxial (20) correspondant dans une direction d'insertion (X), et des moyens de retenue (10) conçus pour retenir le câble coaxial (20) à l'intérieur du corps (2, 2', 2"), les moyens de retenue (10) comprenant au moins un élément de retenue (11) mobile entre une première position et une seconde position, l'élément de retenue (11) comprenant une ouverture (13), l'élément de retenue (11) étant conçu pour être traversé par le câble coaxial (20) correspondant dans la direction d'insertion (X) à travers ladite ouverture (13) lorsque l'élément de retenue (11) est agencé dans la première position dans laquelle ladite ouverture (13) est agencée alignée avec le trou (4, 5) respectif du corps (2, 2', 2"), l'élément de retenue (11) étant conçu pour piéger le câble coaxial (20) contre le corps (2,2',2") dans la seconde position dans laquelle l'ouverture (13) est agencée de manière décentrée par rapport au trou (4,5) respectif du corps (2,2',2"),
dans lequel les moyens de retenue (10) comprennent des moyens élastiques (12) conçus pour maintenir l'élément de retenue (11) dans la seconde position,
dans lequel le corps (2, 2', 2") comprend au moins deux trous (4, 5) conçus pour être traversés par le câble coaxial (20) correspondant, lesdits trous (4, 5) étant agencés alignés l'un avec l'autre définissant la direction d'insertion (X) pour le câble coaxial (20), et une cavité (7) qui assure la communication des deux trous (4, 5) l'un avec l'autre, et
dans lequel l'un des trous (4) du corps (2, 2', 2") comprend une butée (4d) qui divise le trou (4) en une première partie (4b) conçue pour loger le câble coaxial (20) et une seconde partie (4c) de diamètre inférieur à celui de la première partie (4b) et qui est conçue pour loger un noyau (21) et un élément isolant (22) du câble coaxial (20),
**caractérisé en ce que** :
l'élément de retenue (11) est agencé au moins partiellement logé dans la cavité (7), l'élément de retenue (11) étant mobile dans la cavité (7) ; et
la butée (4d) est une surface de rotation en forme de coin qui s'étend vers l'intérieur du trou (4), la butée (4d) étant conçue pour être introduite entre l'élément isolant (22) et un blindage (23) du câble coaxial (20) augmentant le contact entre le blindage (23) et le corps (2).

2. Dispositif de raccordement selon la revendication précédente, dans lequel l'élément de retenue (11) est agencé dans la première position lorsqu'il est actionné, étant maintenu dans la seconde position lorsqu'il est en mode passif.

3. Dispositif de raccordement selon la revendication précédente, dans lequel l'élément de retenue (11) est mobile dans la cavité (7) dans une direction (Y) orthogonale à la direction d'insertion (X).

4. Dispositif de raccordement selon la revendication 3, dans lequel les moyens élastiques (12) comprennent un ressort qui est logé dans la cavité (7) du corps (2,2',2"), une extrémité du ressort (12a) reposant sur un fond (8) de la cavité (7) et une autre extrémité du ressort (12b) étant en contact avec l'élément de retenue (11).

5. Dispositif de raccordement selon la revendication précédente, dans lequel le ressort des moyens élastiques (12) est un ressort de compression conique (26) à spires de forme quadrangulaire, le ressort de compression conique (26) étant dimensionnellement adapté à la cavité (7) du corps (2, 2', 2") et agencé de manière à ce qu'une spire de base (28b) du ressort de compression conique (26) soit en contact avec le fond (8) de la cavité (7) et qu'une spire supérieure (28a) soit en contact avec l'élément de retenue (11).

6. Dispositif de raccordement selon l'une quelconque des revendications précédentes, dans lequel l'élément de retenue (11) comprend une surface d'actionnement (16) accessible depuis l'extérieur du corps (2,2',2").

7. Dispositif de raccordement selon la revendication 1, dans lequel le corps (2,2',2") comprend dans la première partie (4b) du trou (4) une pluralité de nervures (18) qui s'étendent dans la direction d'insertion (X) et qui sont conçues pour assurer le contact continu avec le câble coaxial (20).

8. Dispositif de raccordement selon la revendication précédente, dans lequel la pluralité de nervures (18) est répartie le long du périmètre de la surface de délimitation (4a) de la première partie (4b) du trou (4).

9. Dispositif de raccordement selon la revendication précédente, comprenant en outre un serre-fil de raccordement symétrique (27) agencé de manière adjacente à la seconde partie (4c) du trou (4), le serre-fil de raccordement symétrique (27) comportant un corps plié (27a) et, à une extrémité supérieure, des broches (27b) avec une surface inclinée (27c) orientée vers la direction d'entrée du câble coaxial (20), les broches (27b) étant adaptées pour loger le noyau (21) du câble coaxial (20) entre elles.

10. Dispositif de raccordement selon l'une quelconque des revendications précédentes, dans lequel l'ouverture (13) de l'élément de retenue (11) est délimitée par une surface de retenue (17) conçue pour pousser, lors du déplacement de l'élément de retenue (11) vers la seconde position, le câble coaxial (20) contre une surface (4a, 5a) délimitant le trou (4, 5) respectif du corps (2, 2',2") et pour maintenir ledit câble coaxial (20) piégé contre ladite surface (4a, 5a) dans la seconde position.

11. Dispositif de raccordement selon la revendication précédente, dans lequel la surface de retenue (17) est une surface courbe.

12. Dispositif de raccordement selon les revendications 10 ou 11, dans lequel l'élément de retenue (11) comprend une saillie (25) faisant saillie radialement vers l'intérieur de l'ouverture (13) à partir de la surface de retenue (17) afin de piéger le câble coaxial (20), ladite saillie (25) étant en forme de coin.

13. Dispositif de raccordement selon les revendications 10 ou 11, dans lequel l'ouverture (13) comporte une géométrie circulaire.

14. Dispositif de raccordement selon l'une quelconque des revendications précédentes, comprenant une fenêtre de visualisation (28) conçue comme un trou traversant qui relie l'extérieur du corps (2, 2', 2") à la butée (4d).
